# FASCICULE DE BREVET EUROPEEN

(11) **EP 4 108 143 B1**
(45) Date de publication et mention de la délivrance du brevet: **01.05.2024**
(21) Numéro de dépôt: 22179057.9
(22) Date de dépôt: 14.06.2022
(51) Int. Cl.: A47J 31/44, A47J 31/60, A47J 31/46

(54) **MACHINE A CAFE AUTOMATIQUE MUNIE D'UN DISPOSITIF DE MOUSSAGE DE LAIT AVEC NETTOYAGE AMELIORE**
AUTOMATISCHE KAFFEEMASCHINE MIT EINER VORRICHTUNG ZUM MILCHSCHÄUMEN MIT VERBESSERTER REINIGUNG
AUTOMATIC COFFEE MACHINE EQUIPPED WITH A MILK FOAMING DEVICE WITH IMPROVED CLEANING

(30) Priorité: 25.06.2021 FR 2106865
(43) Date de publication de la demande: 28.12.2022
(73) Titulaire: SEB S.A., 69130 Ecully (FR)
(72) Inventeur: BICHET, Fabrice, 69134 ECULLY CEDEX (FR); LAMBALLE, Alexandre, 69134 ECULLY CEDEX (FR)
(74) Mandataire: SEB Développement

(56) Documents cités:
- EP-A1- 2 353 472
- DE-U1-202011 107 306
- US-B2- 10 799 063

## Description

La présente invention concerne le domaine technique général des machines à café automatiques comportant un dispositif de moussage de lait, plus particulièrement un dispositif de moussage de lait comprenant un système de nettoyage.

### Etat de la technique

Il est connu du document EP2353472 une machine à café automatique comportant un dispositif de moussage de lait. Le dispositif de moussage comprend une chambre de moussage alimenté par un conduit d'amenée d'eau chaude/ vapeur, un conduit d'amenée de lait et un conduit d'amenée d'air. Le conduit d'amenée d'eau chaude/vapeur comporte une restriction de section formant un système d'aspiration de lait et d'air basé sur l'effet venturi. La machine à café automatique comporte une chaudière produisant de l'eau chaude et/ou de la vapeur, un circuit de commande et une vanne rotative agencé sur les conduits d'amenée d'eau chaude/ vapeur et d'amenée d'air. Le circuit de commande comporte un programme de nettoyage du dispositif de moussage de lait dans lequel le circuit de commande pilote la chaudière et la vanne rotative pour envoyer de d'eau chaude dans le conduit d'amenée d'air. Ainsi, le dispositif de moussage, notamment le conduit d'amenée d'air et le conduit d'amenée de lait, est nettoyé par l'eau chaude en évacuant les résidus de lait.

Cependant, la chambre de moussage et la zone d'admission du lait en amont de la chambre de moussage sont moins bien balayés par l'eau chaude et des résidus adhérents peuvent rester accrochés.

De plus, l'envoi uniquement d'eau chaude peut s'avérer insuffisant pour décoller les résidus les plus adhérents, notamment lorsque l'utilisateur n'a pas lancé un nettoyage immédiatement après avoir réalisé une ou plusieurs boissons à base de lait.

### Résumé de l'invention

La présente invention vise à remédier à ces inconvénients.

Le problème technique à la base de l'invention consiste à proposer une machine à café automatique comportant un dispositif de moussage de lait qui présente un fonctionnement sûr et ergonomique, notamment grâce à un système de nettoyage optimisé du dispositif de moussage de lait.

Un autre but de l'invention est de proposer une machine à café automatique comportant un dispositif de moussage de lait qui présente une conception simple et économique à mettre en oeuvre.

A cet effet, l'invention a pour objet une machine à café automatique comportant un dispositif de moussage de lait comprenant une chambre de moussage alimenté par un conduit d'amenée d'eau chaude/vapeur, un conduit d'amenée de lait et un conduit d'amenée d'air, le conduit d'amenée d'eau chaude/vapeur comportant une restriction de section formant un système d'aspiration de lait et d'air basé sur l'effet venturi, la machine à café automatique comportant une chaudière produisant de l'eau chaude et/ou de la vapeur, un circuit de commande et au moins une électrovanne d'entretien agencé sur au moins le conduit d'amenée d'eau chaude/vapeur, le circuit de commande comportant un programme de nettoyage du dispositif de moussage de lait et un organe d'activation du programme de nettoyage, le circuit de commande pilotant la chaudière et l'au moins une électrovanne d'entretien pour envoyer de d'eau chaude/vapeur dans le conduit d'amenée d'air après un appui sur l'organe d'activation, caractérisé en ce que le dispositif de moussage de lait comporte un conduit de liaison reliant le conduit d'amenée d'eau chaude/vapeur et le conduit d'amenée d'air et en ce que, pendant le programme de nettoyage, le circuit de commande pilote la chaudière et l'au moins une électrovanne d'entretien pour envoyer de d'eau chaude/vapeur de manière alternée dans le conduit d'amenée d'eau chaude/vapeur et dans le conduit d'amenée d'air, par le conduit de liaison.

Ainsi, la chambre de moussage et une zone d'admission du lait en amont de la chambre de moussage sont nettoyées par l'eau chaude/vapeur envoyée par le conduit d'amenée d'eau chaude/vapeur et les conduits d'amenée d'air et d'amenée de lait sont nettoyés par l'eau chaude/vapeur envoyée par le conduit d'amenée d'air. De plus, lors de l'ouverture de l'électrovanne d'entretien, la pression générée dans la chaudière par le chauffage de l'eau propulse l'eau chaude/vapeur qui lui confère un pouvoir accru de décollement des résidus de lait.

Par l'effet Venturi, on comprend le nom donné à un phénomène de la dynamique des fluides, selon lequel un fluide en écoulement subit une dépression là où la section d'écoulement se rétrécit et là où la vitesse d'écoulement augmente.

Avantageusement, l'au moins une électrovanne d'entretien est une électrovanne trois voies agencée sur le conduit d'amenée d'eau chaude/ vapeur et sur le conduit de liaison .

Une telle disposition permet d'orienter simplement et de manière économique l'eau chaude/vapeur vers le conduit d'amenée d'eau chaude/vapeur ou vers le conduit de liaison qui communique avec le conduit d'amenée d'air.

De préférence, le circuit de commande pilote la chaudière et l'au moins une électrovanne d'entretien pour réaliser un cycle de nettoyage C1 consistant à envoyer de d'eau chaude dans le conduit d'amenée d'eau chaude/ vapeur pendant au moins un temps T1 puis dans le conduit d'amenée d'air par le conduit de liaison pendant au moins un temps T2.

Un tel cycle de nettoyage avec de l'eau chaude permet d'évacuer la majorité des résidus de lait.

Avantageusement, le temps T1 et le temps T2 sont compris respectivement entre une seconde et trois secondes.

Ainsi, les temps T1 et T2 sont courts et permettent de réaliser un cycle de nettoyage C1 court.

Avantageusement, le circuit de commande pilote la chaudière et l'au moins une électrovanne d'entretien pour réaliser un cycle de nettoyage C2 consistant à enchainer au moins deux fois, de manière successive, un cycle de nettoyage C1.

Un tel cycle de nettoyage C2 permet de décoller efficacement les résidus de lait qui sont adhérents.

De manière avantageuse, le circuit de commande pilote la chaudière et l'au moins une électrovanne d'entretien pour réaliser un cycle de nettoyage C2 consistant à enchainer au moins cinq fois, de manière successive, un cycle de nettoyage C1.

Un tel cycle de nettoyage C2 permet de nettoyer efficacement le dispositif de moussage de lait, notamment lorsque l'utilisateur n'a pas lancé un nettoyage immédiatement après avoir réalisé une ou plusieurs boissons à base de lait.

De préférence, le circuit de commande pilote la chaudière et l'au moins une électrovanne d'entretien pour réaliser un cycle de séchage C3 consistant à envoyer de la vapeur dans le conduit d'amenée d'eau chaude/ vapeur pendant au moins un temps T3 puis dans le conduit d'amenée d'air par le conduit de liaison pendant au moins un temps T4.

Ainsi, un tel cycle de séchage permet d'évacuer les gouttelettes d'eau qui subsistent après un cycle de nettoyage dans le dispositif de moussage et d'éventuels résidus de lait. L'absence d'eau et de résidus de lait permet d'éviter le développement de bactéries et ainsi, obtenir une machine à café qui respecte bien les règles d'hygiène.

De manière avantageuse, le temps T3 et le temps T4 sont compris respectivement entre 5 secondes et 15 secondes.

Ainsi, les temps T3 et T4 sont assez longs et permettent de bien assécher le dispositif de moussage.

Avantageusement, la chaudière est une chaudière instantanée alimentée en eau par une pompe électrique.

Une telle construction permet de passer rapidement de la production d'eau chaude à la production de vapeur et réciproquement en faisant varier le débit de la pompe.

De préférence, la machine à café automatique comporte une électrovanne d'air et/ou un clapet anti-retour agencé sur le conduit d'amenée d'air, en amont d'une zone de jonction entre le conduit de liaison et le conduit d'amenée d'air.

Ainsi, l'eau chaude/vapeur de nettoyage ne peut remonter vers une entrée du conduit d'amenée d'air.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue en perspective d'une machine à café automatique comportant un dispositif de moussage de lait selon un mode particulier de réalisation de l'invention.
La figure 2 est une vue schématique de la machine à café automatique munie du dispositif de moussage de lait illustrée sur la figure 1.
La figure 3 est une vue en coupe partielle suivant le plan de coupe vertical suivant la ligne III-III du dispositif de moussage de lait de la machine à café automatique de la figure 1.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "haut", "bas", "avant", "arrière", "longitudinal", "transversal", employés pour décrire la machine à café automatique font référence à cette machine reposant sur un plan de travail, en situation d'usage.

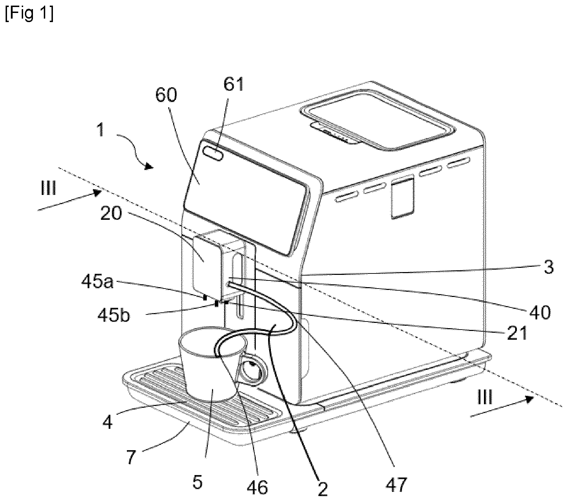

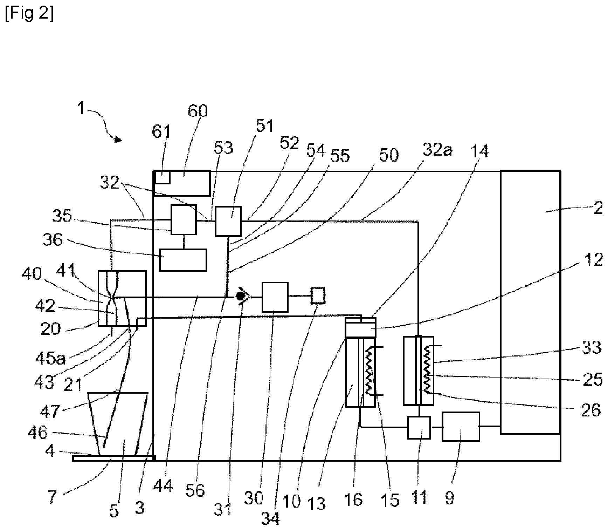

Tel que visible aux figures 1 et 2, la machine à café automatique 1 comporte un réservoir 2 formant une alimentation en eau froide, une pompe 9 électrique (Fig. 2) et un dispositif d'infusion 10. Le dispositif d'infusion 10 est muni d'une chambre d'infusion 12 alimentée en mouture de café par un broyeur à grains (non représentés sur les figures). La machine à café automatique 1 comporte un bâti 3, un support de récipient 4 sur lequel un récipient 5 peut être disposé, et une tête de distribution 20 réglable en hauteur. La tête de distribution 20 comporte une buse de sortie de café 21. Le support de récipient 4 est agencé au-dessus d'un bac récolte gouttes 7. La tête de distribution 20 est montée coulissante verticalement entre une positon haute dans laquelle l'utilisateur peut déposer une tasse de grande taille sur le repose tasse 4 et une position basse dans laquelle l'utilisateur peut déposer une tasse de petite taille sur le repose tasse 4. La machine à café automatique 1 comporte un circuit de commande 50 pour gérer la réalisation d'une boisson à partir des instructions données par un utilisateur.

Tel que visible à la figures 2, la pompe 9 électrique alimente deux chaudières 13, 33 instantanées : une chaudière 13 pour produire de l'eau chaude pour alimenter le dispositif d'infusion 10 et une chaudière 33 pour produire de l'eau chaude ou de la vapeur. La pompe 9 électrique comprend une entrée reliée au réservoir 2 qui est destiné à recevoir de l'eau froide. La pompe 9 électrique comporte une sortie reliée à une électrovanne11 qui permet d'orienter l'eau vers la chaudière 13 ou vers la chaudière 33. La chaudière 33 (Fig. 2) contient une résistance électrique chauffante 25 et un canal 26 de passage et de chauffage de l'eau. La chaudière 13 est agencée sous la chambre d'infusion 12 qui est munie d'une ouverture supérieure. La chambre d'infusion 12 est susceptible de recevoir un piston presseur 14 monté déplaçable selon un axe vertical au moyen d'un mécanisme d'entraînement (ce mécanisme n'est pas illustré sur les figures). La chaudière 13 est destinée à chauffer l'eau pour la préparation du café dans la chambre d'infusion 12.

La chaudière 13 contient une résistance électrique chauffante 15, un canal 16 de passage et de chauffage de l'eau dont une entrée est reliée, via la pompe 9 électrique au réservoir 2 d'eau froide et dont une extrémité débouche sur le fond de la chambre d'infusion 12. Lorsque le piston presseur 14 est dans une position basse de tassage telle que représenté à la figure 2, la chambre d'infusion 12 est reliée fluidiquement à la sortie de café 21 par un conduit de distribution 22. Un tel dispositif d'infusion 10 a, par exemple, été décrit plus en détail dans la demande de brevet PCT : WO9912456.

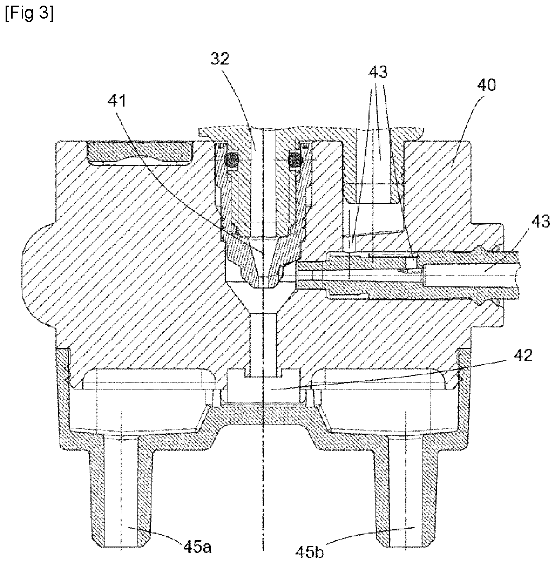

Conformément aux figures 2 et 3, la machine à café automatique 1 comporte un dispositif de moussage 40 de lait agencé dans la tête de distribution 20. Le dispositif de moussage 40 comporte un système d'aspiration de lait et d'air à effet venturi à partir d'une alimentation en eau chaude/vapeur issue de la chaudière 33. Le système d'aspiration à effet venturi est formé à partir d'une restriction de section 41 d'un conduit d'amenée de vapeur 32 qui débouche dans une chambre de moussage 42. Le passage du flux de vapeur crée une dépression au niveau de la restriction de section 41. Le dispositif de moussage 40 comporte un conduit d'amenée de lait 43 et un conduit d'amenée d'air 44 qui sont connectés à une sortie de la restriction de section 41 du conduit d'amenée de vapeur 32. Avantageusement, le conduit d'amenée de lait 43 et le conduit d'amenée d'air 44 se rejoignent avant d'atteindre la restriction de section 41 du conduit d'amenée de vapeur 32 pour former un mélange lait/air qui sera ensuite aspiré par le système d'aspiration à effet venturi. Le conduit d'amenée de lait 43 comporte une portion souple 47 munie d'une extrémité libre 46 qui est destiné à coopérer avec un récipient contenant du lait. Le dispositif de moussage de lait 40 comporte deux buses de sortie de lait moussé 45a, 45b (Fig.3) agencées à proximité de la buse de sortie de café 21.

Tel que visible à la figure 2, que le dispositif de moussage 40 de lait comporte un conduit de liaison 50 reliant le conduit d'amenée d'eau chaude/vapeur 32 et le conduit d'amenée d'air 44. Le dispositif de moussage 40 comporte une électrovanne d'entretien 51 trois voies qui comprend une première voie d'entrée 52 et des deuxième et troisième voies de sortie 53, 54. L'électrovanne d'entretien 51 est agencée sur le conduit d'amenée d'eau chaude/vapeur 32 en étant raccordé en amont à la voie d'entrée 52 par une portion 32a du conduit d'amenée d'eau chaude/vapeur 32 et en aval par la seconde voie de sortie 53. Le conduit de liaison 50 comporte une première extrémité 55 reliée à la troisième voie de sortie 54. Le conduit de liaison 50 comporte une deuxième extrémité 56 qui est reliée au conduit d'amenée d'air 44 en formant une zone de jonction en forme de T.

Le circuit de commande 60 comporte un programme de nettoyage du dispositif de moussage 40 de lait et un organe d'activation 61 du programme de nettoyage. L'organe d'activation 61 peut être formé notamment par une touche capacitive. Pendant le programme de nettoyage, le circuit de commande 60 pilote la chaudière 33 et l'électrovanne d'entretien 51 pour envoyer de d'eau chaude/vapeur de manière alternée dans le conduit d'amenée d'eau chaude/vapeur 32 et dans le conduit d'amenée d'air 44, par le conduit de liaison 50. Le programme de nettoyage comporte un cycle de nettoyage C1. Pour réaliser le cycle de nettoyage C1, le circuit de commande 60 pilote la chaudière 33 pour produire de l'eau chaude et l'électrovanne d'entretien 51 pour envoyer de l'eau chaude dans le conduit d'amenée d'eau chaude/ vapeur 32 pendant un temps T1 égal à une seconde puis dans le conduit d'amenée d'air 44 par le conduit de liaison 50 pendant un temps T2 égal à une seconde. Le programme de nettoyage comporte un cycle de nettoyage C2 qui consiste à enchainer cinq fois, de manière successive, un cycle de nettoyage C1.

Le programme de nettoyage comporte un cycle de séchage C3. Pour réaliser le cycle de séchage C3, le circuit de commande 60 pilote la chaudière 33 et l'électrovanne d'entretien 51 pour envoyer de la vapeur dans le conduit d'amenée d'eau chaude/vapeur 32 pendant un temps T3 égal à dix secondes puis dans le conduit d'amenée d'air 44 par le conduit de liaison 50 pendant un temps T4 égal à dix secondes. Le programme de nettoyage complet consiste à réaliser le cycle de nettoyage C2 suivi du cycle de séchage C3.

En fonctionnement, pour nettoyer le dispositif de moussage 40 et notamment le conduit d'amenée de lait 43 muni de la portion souple 47, l'utilisateur va placer préalablement l'extrémité libre 46 de la portion souple 47 dans un récipient 5, par exemple une tasse (Fig.1) et appuyer sur l'organe d'activation 61. Le circuit de commande 60 va alors réaliser le cycle de nettoyage C2 suivi du cycle de séchage C3. L'eau chaude de nettoyage, les condensats de vapeur et les résidus de lait vont s'écouler par les buses de sortie de lait moussé 45a, 45b et par l'extrémité libre 46 de la portion souple 47 du conduit d'amenée de lait 43.

De manière avantageuse, le dispositif de moussage 40 comporte une électrovanne d'air 30 et un clapet anti-retour 31 agencé sur le conduit d'amenée d'air 44, en amont de la zone de jonction entre le conduit de liaison 50 et le conduit d'amenée d'air 44. L'électrovanne d'air 30 permet d'ouvrir ou fermer le conduit d'amenée d'air 44 pour pouvoir réaliser des boissons à base de lait moussé ou de lait chaud. La fermeture du conduit d'amenée d'air 44 permet également de favoriser l'amorçage du système d'aspiration à effet Venturi, notamment l'aspiration du lait. Le conduit d'amenée d'air 44 présente, en amont de l'électrovanne d'air 30 une restriction de section 34 permettant de calibrer la quantité d'air admise dans le système d'aspiration.

De préférence, le dispositif de moussage 40 comporte une électrovanne de moussage 35 trois voies agencée sur le conduit d'amenée d'eau chaude/vapeur 32 et qui est raccordée à un condenseur 36. Lors du démarrage de la production de vapeur par la chaudière 33, le circuit de commande 60 pilote l'électrovanne de moussage 35 pour diriger les premières émissions de vapeur qui ne sont pas de bonne qualité vers le condenseur 36. Le condenseur 36 est relié au bac récolte gouttes 7.

Bien entendu, l'invention n'est nullement limitée au mode de réalisation décrit et illustré qui n'a été donné qu'à titre d'exemple.

Ainsi, dans une variante de réalisation non illustrée, l'électrovanne d'entretien 51 est une vanne rotative comportant au moins un disque fixe muni de canaux et un disque mobile muni de canaux, le disque mobile étant entrainé en rotation par un moteur pour prendre au moins deux positions dans lesquelles l'eau chaude/vapeur est envoyée soit dans le conduit d'amenée d'eau chaude/vapeur 32 ou soit dans le conduit de liaison 50.

## Revendications

1. Machine à café automatique (1) comportant un dispositif de moussage (40) de lait comprenant une chambre de moussage (42) alimenté par un conduit d'amenée d'eau chaude/vapeur (32), un conduit d'amenée de lait (43) et un conduit d'amenée d'air (44), le conduit d'amenée d'eau chaude/vapeur (32) comportant une restriction de section (41) formant un système d'aspiration de lait et d'air basé sur l'effet venturi, la machine à café automatique (1) comportant une chaudière (33) produisant de l'eau chaude et/ou de la vapeur, un circuit de commande (60) et au moins une électrovanne d'entretien (51) agencé sur au moins le conduit d'amenée d'eau chaude/vapeur (32), le circuit de commande (60) comportant un programme de nettoyage du dispositif de moussage (40) de lait et un organe d'activation (61) du programme de nettoyage, le circuit de commande (60) étant configuré pour piloter la chaudière (33) et l'au moins une électrovanne d'entretien (51) pour envoyer de d'eau chaude/vapeur dans le conduit d'amenée d'air (44) après un appui sur l'organe d'activation (61), **caractérisé en ce que** le dispositif de moussage (40) de lait comporte un conduit de liaison (50) reliant le conduit d'amenée d'eau chaude/vapeur (32) et le conduit d'amenée d'air (44) et **en ce que**, pendant le programme de nettoyage, le circuit de commande (60) est configuré pour piloter la chaudière (33) et l'au moins une électrovanne d'entretien (51) pour envoyer de d'eau chaude/vapeur de manière alternée dans le conduit d'amenée d'eau chaude/vapeur (32) et dans le conduit d'amenée d'air (44), par le conduit de liaison (50).

2. Machine à café automatique (1) selon la revendication 1, **caractérisée en ce que** l'au moins une électrovanne d'entretien (51) est une électrovanne trois voies agencée sur le conduit d'amenée d'eau chaude/ vapeur (32) et sur le conduit de liaison (50).

3. Machine à café automatique (1) selon l'une quelconque des revendications 1 à 2, **caractérisée en ce que** le circuit de commande (60) pilote la chaudière (33) et l'au moins une électrovanne d'entretien (51) pour réaliser un cycle de nettoyage C1 consistant à envoyer de l'eau chaude dans le conduit d'amenée d'eau chaude/vapeur (32) pendant au moins un temps T1 puis dans le conduit d'amenée d'air (44), par le conduit de liaison (50), pendant au moins un temps T2.

4. Machine à café automatique (1) selon la revendication 3, **caractérisée en ce que** le temps T1 et le temps T2 sont compris respectivement entre une seconde et trois secondes.

5. Machine à café automatique (1) selon l'une quelconque des revendications 3 à 4, **caractérisée en ce que** le circuit de commande pilote la chaudière (33) et l'au moins une électrovanne d'entretien (51) pour réaliser un cycle de nettoyage C2 consistant à enchainer au moins deux fois, de manière successive, un cycle de nettoyage C1.

6. Machine à café automatique (1) selon la revendication 5, **caractérisée en ce que** le circuit de commande pilote la chaudière (33) et l'au moins une électrovanne d'entretien (51) pour réaliser un cycle de nettoyage C2 consistant à enchainer au moins cinq fois, de manière successive, un cycle de nettoyage C1.

7. Machine à café automatique (1) selon l'une quelconque des revendications 1 à 6, **caractérisée en ce que** le circuit de commande (60) pilote la chaudière (33) et l'au moins une électrovanne d'entretien (51) pour réaliser un cycle de séchage C3 consistant à envoyer de la vapeur dans le conduit d'amenée d'eau chaude/vapeur (32) pendant au moins un temps T3 puis dans le conduit d'amenée d'air (44), par le conduit de liaison (50), pendant au moins un temps T4.

8. Machine à café automatique (1) selon la revendication 7, **caractérisée en ce que** le temps T3 et le temps T4 sont compris respectivement entre 5 secondes et 15 secondes.

9. Machine à café automatique (1) selon l'une quelconque des revendications 1 à 8, **caractérisée en ce que** la chaudière (33) est une chaudière instantanée alimentée en eau par une pompe (9) électrique.

10. Machine à café automatique (1) selon l'une quelconque des revendications 1 à 9, **caractérisée en ce qu'**elle comporte une électrovanne d'air (30) et/ou un clapet anti-retour (31) agencé sur le conduit d'amenée d'air (44), en amont d'une zone de jonction entre le conduit de liaison (50) et le conduit d'amenée d'air (44).

## Patentansprüche

1. Automatische Kaffeemaschine (1), umfassend eine Schäumungsvorrichtung (40) für Milch, die eine Schäumungskammer (42) umfasst, die von einer Warmwasser-/Dampfzufuhrleitung (32), einer Milchzufuhrleitung (43) und einer Luftzufuhrleitung (44) versorgt wird, wobei die Warmwasser-/Dampfzufuhrleitung (32) einen Verengungsabschnitt (41) umfasst, der ein Ansaugsystem für Milch und für Luft basierend auf dem Venturi-Effekt bildet, wobei die automatische Kaffeemaschine (1) einen Heizkessel (33), der warmes Wasser und/oder Dampf erzeugt, eine Steuerschaltung (60) und mindestens ein Magnetventil zur Wartung (51) umfasst, das auf der mindestens den Warmwasser-/Dampfzufuhrleitung (32) eingerichtet ist, wobei die Steuerschaltung (60) ein Reinigungsprogramm der Schäumungsvorrichtung (40) für Milch und ein Aktivierungselement (61) des Reinigungsprogramms umfasst, wobei die Steuerschaltung (60) konfiguriert ist, um den Heizkessel (33) und das mindestens eine Magnetventil zur Wartung (51) zu steuern, um nach einem Drücken auf das Aktivierungselement (61) warmes Wasser/Dampf in die Luftzufuhrleitung (44) zu leiten, **dadurch gekennzeichnet, dass** die Schäumungsvorrichtung (40) für Milch eine Verbindungsleitung (50) umfasst, die die Warmwasser-/Dampfzufuhrleitung (32) und die Luftzufuhrleitung (44) verbindet, und dadurch, dass die Steuerschaltung (60) während des Reinigungsprogramms konfiguriert ist, um den Heizkessel (33) und das mindestens eine Magnetventil zur Wartung (51) zu steuern, um über die Verbindungsleitung (50) warmes Wasser/Dampf abwechselnd in die Warmwasser-/Dampfzufuhrleitung (32) und in die Luftzufuhrleitung (44) zu leiten.

2. Automatische Kaffeemaschine (1) nach Anspruch 1, **dadurch gekennzeichnet, dass** das mindestens eine Magnetventil zur Wartung (51) ein Dreiwege-Magnetventil ist, das auf der Warmwasser-/Dampfzufuhrleitung (32) und auf der Verbindungsleitung (50) angeordnet ist.

3. Automatische Kaffeemaschine (1) nach einem der Ansprüche 1 bis 2, **dadurch gekennzeichnet, dass** die Steuerschaltung (60) den Heizkessel (33) und das mindestens eine Magnetventil zur Wartung (51) steuert, um einen Reinigungszyklus C1 durchzuführen, der darin besteht, warmes Wasser während mindestens einer Zeit T1 in die Warmwasser-/Dampfzufuhrleitung (32), dann über die Verbindungsleitung während mindestens einer Zeit T2 in die Luftzufuhrleitung (44) zu leiten.

4. Automatische Kaffeemaschine (1) nach Anspruch 3, **dadurch gekennzeichnet, dass** die Zeit T1 und die Zeit T2 jeweils zwischen einer Sekunde und drei Sekunden betragen.

5. Automatische Kaffeemaschine (1) nach einem der Ansprüche 3 bis 4, **dadurch gekennzeichnet, dass** die Steuerschaltung den Heizkessel (33) und das mindestens eine Magnetventil zur Wartung (51) steuert, um einen Reinigungszyklus C2 durchzuführen, der darin besteht, einen Reinigungszyklus C1 mindestens zweimal hintereinander aneinanderzureihen.

6. Automatische Kaffeemaschine (1) nach Anspruch 5, **dadurch gekennzeichnet, dass** die Steuerschaltung den Heizkessel (33) und das mindestens eine Magnetventil zur Wartung (51) steuert, um einen Reinigungszyklus C2 durchzuführen, der darin besteht, einen Reinigungszyklus C1 mindestens fünfmal hintereinander aneinanderzureihen.

7. Automatische Kaffeemaschine (1) nach einem der Ansprüche 1 bis 6, **dadurch gekennzeichnet, dass** die Steuerschaltung (60) den Heizkessel (33) und das mindestens eine Magnetventil zur Wartung (51) steuert, um einen Trocknungszyklus C3 durchzuführen, der darin besteht, Dampf während mindestens einer Zeit T3 in die Warmwasser-/Dampfzufuhrleitung (32), dann über die Verbindungsleitung (50) während mindestens einer Zeit T4 in die Luftzufuhrleitung (44) zu leiten.

8. Automatische Kaffeemaschine (1) nach Anspruch 7, **dadurch gekennzeichnet, dass** die Zeit T3 und die Zeit T4 jeweils zwischen 5 Sekunden und 15 Sekunden betragen.

9. Automatische Kaffeemaschine (1) nach einem der Ansprüche 1 bis 8, **dadurch gekennzeichnet, dass** der Heizkessel (33) ein Sofort-Heizkessel ist, der von einer elektrischen Pumpe (9) mit Wasser versorgt wird.

10. Automatische Kaffeemaschine (1) nach einem der Ansprüche 1 bis 9, **dadurch gekennzeichnet, dass** sie eine Luft-Magnetventil (30) und/oder ein Rückschlagventil (31) umfasst, das auf der Luftzufuhrleitung (44) stromaufwärts eines Bereichs einer Verbindungsstelle zwischen der Verbindungsleitung (50) und der Luftzufuhrleitung (44) angeordnet ist.

## Claims

1. Automatic coffee machine (1) comprising a milk foaming device (40) which comprises a foaming chamber (42) fed by a hot water/steam feed duct (32), a milk feed duct (43) and an air feed duct (44), the hot water/steam feed duct (32) comprising a cross-sectional restriction (41) forming a milk and air suction system based on the Venturi effect, the automatic coffee machine (1) comprising a boiler (33) producing hot water and/or steam, a control circuit (60) and at least one maintenance solenoid valve (51) arranged on at least the hot water/steam feed duct (32), the control circuit (60) comprising a programme for cleaning the milk foaming device (40) and a member (61) for activating the cleaning programme, the control circuit (60) being configured to direct the boiler (33) and the at least one maintenance solenoid valve (51) to send hot water/steam into the air feed duct (44) after the activation member (61) has been pressed, **characterised in that** the milk foaming device (40) comprises a connecting duct (50) connecting the hot water/steam feed duct (32) and the air feed duct (44) and **in that**, during the cleaning programme, the control circuit (60) is configured to direct the boiler (33) and the at least one maintenance solenoid valve (51) to send hot water/steam alternately into the hot water/steam feed duct (32) and into the air feed duct (44), via the connecting duct (50).

2. Automatic coffee machine (1) according to claim 1, **characterised in that** the at least one maintenance solenoid valve (51) is a three-way solenoid valve arranged on the hot water/steam feed duct (32) and on the connecting duct (50).

3. Automatic coffee machine (1) according to any one of claims 1 to 2, **characterised in that** the control circuit (60) directs the boiler (33) and the at least one maintenance solenoid valve (51) to carry out a cleaning cycle C1 consisting of sending hot water into the hot water/steam feed duct (32) for at least a time T1 and then into the air feed duct (44), via the connecting duct (50), for at least a time T2.

4. Automatic coffee machine (1) according to claim 3, **characterised in that** the time T1 and the time T2 are between one second and three seconds, respectively.

5. Automatic coffee machine (1) according to any one of claims 3 to 4, **characterised in that** the control circuit directs the boiler (33) and the at least one maintenance solenoid valve (51) to carry out a cleaning cycle C2 consisting of sequencing a cleaning cycle C1 at least twice in succession.

6. Automatic coffee machine (1) according to claim 5, **characterised in that** the control circuit directs the boiler (33) and the at least one maintenance solenoid valve (51) to carry out a cleaning cycle C2 consisting of sequencing a cleaning cycle C1 at least five times in succession.

7. Automatic coffee machine (1) according to any one of claims 1 to 6, **characterised in that** the control circuit (60) directs the boiler (33) and the at least one maintenance solenoid valve (51) to carry out a drying cycle C3 consisting of sending steam into the hot water/steam feed duct (32) for at least a time T3 and then into the air feed duct (44), via the connecting duct (50), for at least a time T4.

8. Automatic coffee machine (1) according to claim 7, **characterised in that** the time T3 and the time T4 are between 5 seconds and 15 seconds, respectively.

9. Automatic coffee machine (1) according to any one of claims 1 to 8, **characterised in that** the boiler (33) is an instantaneous boiler fed with water by an electric pump (9).

10. Automatic coffee machine (1) according to any one of claims 1 to 9, **characterised in that** it comprises an air solenoid valve (30) and/or a non-return valve (31) arranged on the air feed duct (44), upstream of a junction zone between the connecting duct (50) and the air feed duct (44).
